Europäisches Patentamt

European Patent Office

Office européen des brevets

(19)

(11) Veröffentlichungsnummer: **0 268 879**
**B1**

(12) **EUROPÄISCHE PATENTSCHRIFT**

(45) Veröffentlichungstag der Patentschrift:
07.03.90

(21) Anmeldenummer: 87116129.5

(22) Anmeldetag: 03.11.87

(51) Int. Cl.⁴: **B60R 25/02**

(54) Sperrvorrichtung für Lenksäulen in Fahrzeugen.

(30) Priorität: 11.11.86 DE 3638429

(43) Veröffentlichungstag der Anmeldung:
01.06.88 Patentblatt 88/22

(45) Bekanntmachung des Hinweises auf die Patenterteilung:
07.03.90 Patentblatt 90/10

(84) Benannte Vertragsstaaten:
DE ES FR GB IT

(56) Entgegenhaltungen:
DE-U- 7 901 593
FR-A- 532 414
FR-A- 2 142 995
FR-A- 2 523 532
GB-A- 2 024 924
US-A- 3 529 453

(73) Patentinhaber: Hülsbeck & Fürst GmbH. & Co. KG,
Steeger Strasse 17, D-5620 Velbert 1(DE)

(72) Erfinder: Wallmichrath, Günter, Talstrasse 12,
D-5620 Velbert 1(DE)

(74) Vertreter: Mentzel, Norbert, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2(DE)

## Beschreibung

Die Erfindung richtet sich auf eine Sperrvorrichtung der im Oberbegriff des Anspruches 1 angegebenen Art.

Bei der bekannten Vorrichtung (DE-A 32 13 719) ist das Sperr-Rad durch achsparallel zur Lenksäule verlaufende Nuten in Radialvorsprüngen mit rechteckigem Querschnitt gegliedert. Um in Sperrlage der Vorrichtung einen unerwünschten Freigang der Lenksäule zu vermeiden, wird ein Paar von spiegelbildlich zueinander in einer Radialebene der Lenksäule angeordneten Sperrhebeln verwendet, die mit ihren beiden Sperrarmen an spiegelbildlich zueinander liegenden Flanken zweier im Radialabstand zueinander liegender Radialvorsprünge angreifen. Ein begrenzter Freigang der Lenksäule verbleibt, wenn beim Einfallen der eine Sperrhebel die Nutmitte zwischen zwei Radialvorsprüngen trifft während der andere Sperrhebel auf den Kopf des Radialvorsprungs stößt. Weil die Sperrvorrichtung einem bestimmten Mindestdrehmoment von z.B. 25 mkp standhalten muß, bei dem eine Abscherung der Radialvorsprünge nicht zu befürchten ist, muß eine verhältnismäßig große Radialvorsprungs-Breite eingehalten werden. Dadurch ergibt sich ein unerwünscht großes Spiel an der Lenksäule, bis beide Sperrhebel eingefallen sind. Infolge solcher Verstellung der Lenksäule fällt ein beachtlicher Raddruck an, der das spätere Ausheben der beiden Sperrhebel durch Schlüsselbetätigung des Lenkschlosses erschwert. Dies macht die Schlüsselbetätigung schwergängig. Durch die doppelte Anordnung von Sperrhebeln ist auch ein beachtlicher Platzaufwand erforderlich.

Der Erfindung liegt die Aufgabe zugrunde, eine zuverlässige, platzsparende Sperrvorrichtung der im Oberbegriff des Anspruches 1 genannten Art zu entwickeln, die einen Freigang zwischen den eingefallenen Sperrteilen vermeidet, die Lenksäule in jeder Winkellage arretiert und in Sperrlage einem hohen Drehmoment standhält. Dies wird erfindungsgemäß durch die im Kennzeichen des Anspruches 1 angeführten Maßnahmen erreicht, denen folgende besondere Bedeutung zukommt.

Weil in der Sperrlage sämtliche Zähne der Innen- und Außenzahnung der beiden Kegelteile ineinander greifen, kann die erfindungsgemäße Sperrvorrichtung einem hohen Drehmoment standhalten, selbst wenn eine verhältnismäßig feine Zahnteilung vorliegt. Jedes Zahn-Paar der beiden Kegelteile braucht nämlich nur einen entsprechend der Zahn-Anzahl kleinen Teil dieses Drehmoments aufzunehmen. Die feine Zahnteilung ermöglichst es andererseits, daß praktisch bei jeder Drehstellung der Lenksäule die Zähne der Außenzahnung mit den Zahnlücken der Innenzahnung ausgerichtet sind. Die Zähne der Innen- und Außenteilung können dabei ein Dreieckprofil aufweisen, so daß es beim Einfall der beiden Kegelteile zu einer Selbstausrichtung von den ineinanderfahrenden Zahnspitzen kommt. Damit können die beiden Kegelteile bei jeder Drehstellung der Lenksäule einschlüpfen. Durch ihre aus Anspruch 3 ersichtliche komplementäre Profilgebung ist eine Spielfreiheit gewährleistet und ein unerwünschter Freigang vermieden. Aus Fertigungsgründen wird man, gemäß Anspruch 2, die Zahnteilung der Innen- und Außenzahnung gleich gestalten und gemäß Anspruch 4 das gleiche Zahnprofil wählen. Weil der Innenraum des matrizenförmigen Kegelteils eine Aufnahme für den anderen patrizenförmigen Kegelteil bildet, ist eine Platzersparnis bei der erfindungsgemäßen Sperrvorrichtung erreicht.Die Zahnteilung kann dabei so fein gewählt sein, daß die Flanken benachbarter, ein Dreieckprofil aufweisender Zähne, gemäß Anspruch 5, aneinander stoßen.

Die Erfindung kann zugleich die Funktion eines Drehmomentbegrenzers erfüllen, wenn der Kegelwinkel sowie der Zahnwinkel und schließlich die in Anspruch 6 und 7 erwähnte Federbelastung so aufeinander abgestimmt sind, daß beim Überschreiten eines bestimmten Drehmoments, von z.B. 25 mkp, die ineinandergreifenden Zahnungen wie Rasthaltungen wirken und zahnweise überspringen, danach aber wieder blockierend wirken. Die Sperrlage der Kupplungsteile bleibt somit erhalten und das Fahrzeug ist nach wie vor nicht lenkbar. Es genügt eine kleine Federbelastung, was eine leichtgängige Schlüsselbetätigung begründet. Für das Entkuppeln ist nur eine kleine Axialbewegung des in Anspruch 6 bzw. 7 erwähnten Kegelteils erforderlich, was für eine platzsparende Konstruktion und eine einfache Steuerung günstig ist.

Für eine solche Steuerung des beweglichen Kegelteils vom Lenkschloß aus genügt bereits der in Anspruch 8 genannte Steuerhebel. Seine Anordnung in der Axialebene der Lenksäule begünstigt den Aufbau und die Wirkungsweise. Der Angriff dieses Steuerhebels am Kegelteil kann durch den Ringabsatz gemäß Anspruch 9 erreicht werden und bietet sich insbesondere dann an, wenn der bewegliche Kegelteil gemäß Anspruch 6 mit der Lenksäule mitdrehbar ist. Die Alternative gemäß Anspruch 7 vermeidet eine Reibung an der Angriffsstelle des Steuerhebels, weil der dortige axialbewegliche Kegeltopf sich nicht mit der Lenksäule mitdreht. Eine solche Sperrvorrichtung ist besonders leichtgängig.

Für den Aufbau der erfindungsgemäßen Vorrichtung gibt es verschiedene Möglichkeiten, deren jede ihre besonderen Vorteile bringt und die in den Ansprüchen 10, 12 und 13 in drei Versionen angegeben ist. Um auch dabei Reibungsverluste am äußeren Hebelarm des Steuerhebels zu vermeiden, empfiehlt sich die aus Anspruch 14 erkennbare Rollreibung zu nutzen.

Die verschiedenen eigenständigen Versionen der erfindungsgemäßen Vorrichtung lassen sich auch problemlos mit einer Schlüsselabzugssicherung kombinieren, die einen zuverlässigen und einfachen Aufbau aus einem Quer- und Längsschieber gemäß den Oberbegriffen nach Anspruch 11, 13 und 16 besitzt. Man braucht nämlich lediglich den Längsschieber im Sinne des Kennzeichens dieser Ansprüche zu gestalten, um von den Vorteilen der Erfindung dabei Gebrauch zu machen.

In den Zeichnungen ist die Erfindung in vier Ausführungsbeispielen dargestellt. Die Erfindung richtet sich auf alle aus der Beschreibung und den Zeichnungen ersichtlichen neuen Merkmale, auch wenn sie in den Ansprüchen nicht ausdrücklich erwähnt worden sind. Die Figuren zeigen in einem Längsschnitt zur Lenksäulenachse die wesentlichsten Teile der erfindungsgemäßen Vorrichtung, und zwar:

Fig. 1 ein erstes Ausführungsbeispiel der erfindungsgemäßen Sperrvorrichtung, bei der der Kegeltopf ortsfest positioniert ist, das Kegelrad axial beweglich ist, sich in Freigabeposition befindet und das Lenkschloß in seiner Ausgangsdrehstellung vor Schlüsselabzug ist,

Fig. 2 das Lenkschloß von Fig. 1 in Sperrlage der beiden Kegelteile nach Abzug des Schlüssels aus dem Lenkschloß,

Fig. 3 eine Abwicklung der Verzahnungsgeometrie des Kegeltopfs von Fig. 1 bzw. 2,

Fig. 4 in einer der Fig. 1 entsprechenden Freigabelage ein zweites Ausführungsbeispiel der Vorrichtung, worin der Kegeltopf längsbeweglich gesteuert ist und das Kegelrad dreh- und axialfest mit der Lenksäule verbunden ist,

Fig. 5 eine der Fig. 2 entsprechende Sperrlage der in Fig. 4 gezeigten Vorrichtung,

Fig. 6 die Freigabelage einer dritten Ausführungsform der erfindungsgemäßen Vorrichtung, mit welcher das zugehörige Lenkschloß in einer Winkelposition zur Lenksäulenachse angeordnet sein kann,

Fig. 7 eine der Fig. 2 bzw. 5 entsprechende Sperrlage der Vorrichtung von Fig. 6,

Fig. 8 die Freigabelage einer vierten Ausführungsform der erfindungsgemäßen Sperrvorrichtung in einer der Fig. 1, 4 bzw. 6 entsprechenden Darstellung, und

Fig. 9 die zugehörige Sperrlage der Vorrichtung von Fig. 8.

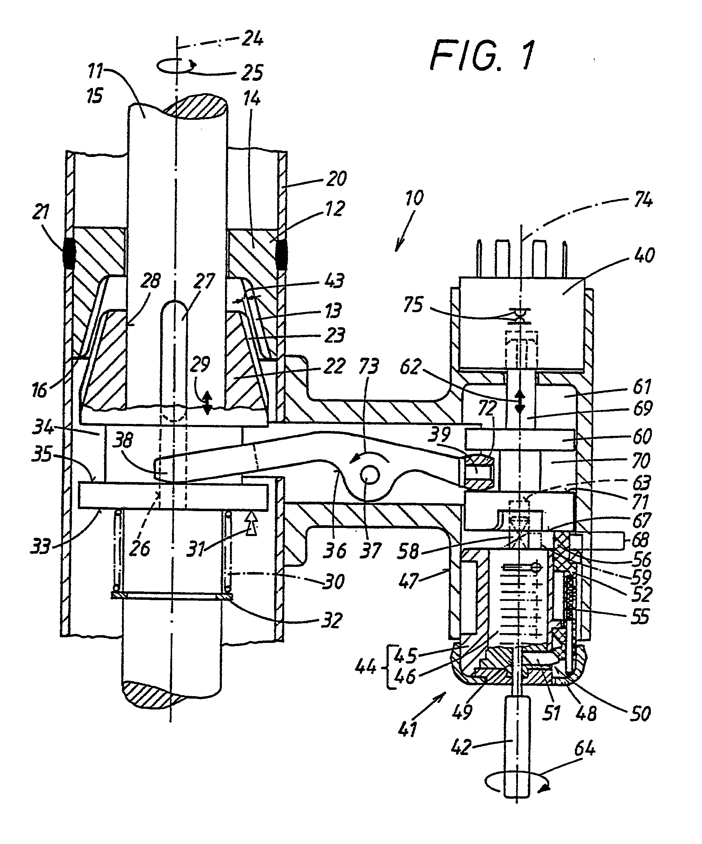

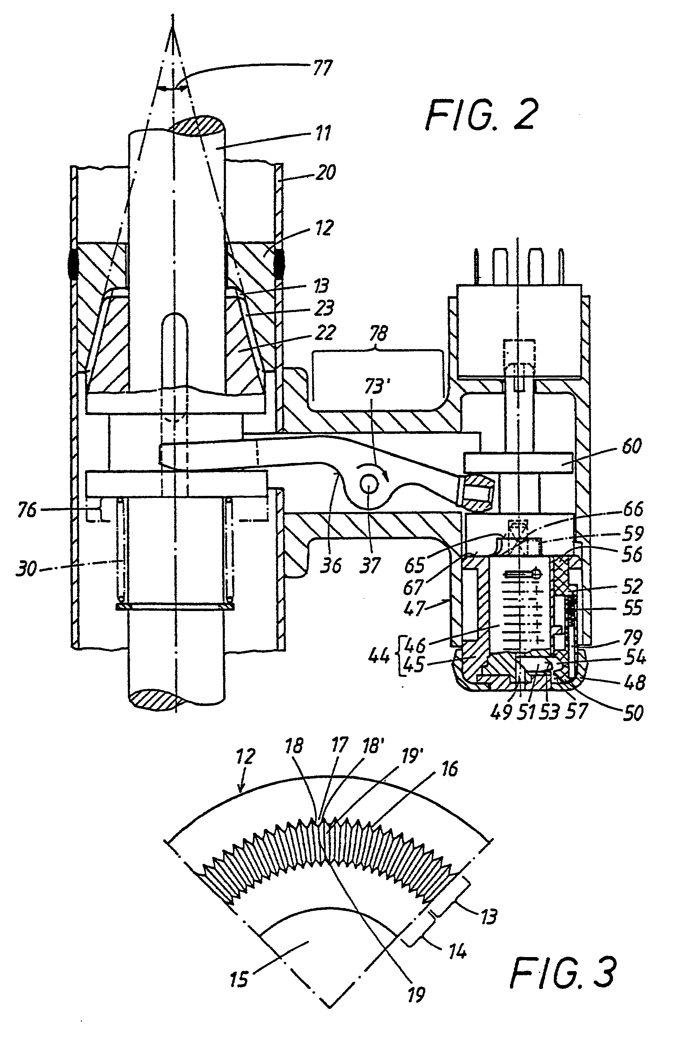

Die in den Fig. 1 und 2 gezeigte Sperrvorrichtung 10 soll eine Lenksäule 11 praktisch in jeder Drehstellung blockieren. Dazu dienen zwei Kegelteile 12, 22, die zueinander komplementär gestaltet sind. Der eine Kegelteil 12 ist matrizenförmig gestaltet und trägt an seiner Innenwand eine Innenzahnung 13, weshalb er nachfolgend kurz "Kegeltopf 12" bezeichnet werden soll. Der andere Kegelteil 22 ist dagegen patrizenförmig gestaltet und besitzt auf seinem Kegelmantel eine Außenzahnung 23 und soll nachfolgend kurz "Kegelrad 22" bezeichnet werden.

Die Innen- und Außenzahnung 13, 23 haben nicht nur die gleiche Zahnung, sondern auch das gleiche Zahnprofil, dessen Form aus der in Fig. 3 ersichtlichen Abwicklung der Innenfläche des Kegeltopfs 12 zu entnehmen ist. Der Topfboden 14 ist, ausweislich der Fig. 1, mit einer Axialbohrung 15 versehen, durch welche die Lenksäule 11 mit seitlichem Spiel hindurchgeführt ist. Dann schließt sich der Kegelinnenmantel mit der Innenzahnung 13 an, worauf das die Kegelbasis bestimmende Stirnende sich anschließt. Fig. 3 zeigt die Verzahnungsgeometrie im Maßstab 2 : 1. Ein einzelner Zahn 16 hat ein Dreieckprofil 17 mit zueinander geneigten Zahnflanken 18, 18', die eine Zahnspitze 19 bilden. Die geneigten Flanken 18', 18 zweier benachbarter Zähne 16, 16 stoßen im Zahngrund 19 spitz zusammen. Die Zähne folgen dicht aufeinander. Man erhält eine feine Zahnteilung. Im vorliegenden Fall besitzt der Kegeltopf 12 einhundert Zähne mit einem 60°-Zahnwinkel.

Bei dieser Sperrvorrichtung 10 ist, gemäß Fig. 1, der Kegeltopf 12 ortsfest angeordnet. Zu seiner Befestigung dient ein die Lenksäule 11 umgebendes Schutzrohr 20, an dessen Rohrinnenfläche der Kegeltopf 12 durch eine Schweißbefestigung 21 od. dgl. festgelegt ist. Der Kegeltopf 12 sitzt koaxial zur strichpunktiert in Fig. 1 angedeuteten Längsachse 24 der Lenksäule 11.

Das Kegelrad 22 ist auf der Lenksäule 11 längsverschieblich gelagert, aber bei der durch den Pfeil 25 in Fig. 1 angedeuteten Drehung der Lenksäule 11 mitdrehbar. Dazu dienen an der Lenksäule 11 befindliche Längsführungsmittel 26, 27. Das Kegelrad 22 besitzt eine Zentralbohrung 28, die in einer Gleitpassung die Lenksäule 11 umschließt. Die Bohrwand dieser Zentralbohrung 28 ist mit einer Längsnut 26 versehen, in welche eine in der Lenksäule 11 befestigte Feder 27 eingreift. Dadurch ist das Kegelrad 22 im Sinne des Doppelpfeils 29 axial verschieblich.

Das Kegelrad 22 ist durch eine Feder 30 gemäß dem Kraftpfeils 31 in Richtung auf den Kegeltopf 12 belastet. Dazu dient eine die Lenksäule 11 umschließende Wendelfeder 30, deren eines Ende sich an einem an der Lenksäule 11 axial festgelegten Sprengring 32 abstützt und deren anderes Ende sich am unteren Stirnende des Kegelrads 22 anliegt. Dieses Stirnende 33 gehört zu einer zylindrischen Verlängerung des Kegelrads 22, die mit einer umlaufenden Ringnut 34 versehen ist und dadurch einen Ringabsatz 35 bildet, welcher dem erwähnten Stirnende 33 abgekehrt ist.

Als Steuermittel für die Axialverschiebung 29 des Kegelrads 22 dient ein zweiarmiger Steuerhebel 36, dessen Schwenkgelenk 37 senkrecht zur Achse 24 verläuft, weshalb die Schwenkebene dieses Steuerhebels 36 in einer Axialebene zur Lenksäule 11 angeordnet ist, welche die Zeichenebene von Fig. 1 bestimmt. Der eine, innere Hebelarm 38 stützt sich an dem Ringabsatz 35 des Kegelrads 22 ab, weil sein anderer, äußerer Hebelarm von einem Drehhubglied 60 festge halten wird. Die Arbeitsstellung dieses Glieds 60 wird durch ein Lenkschloß 41 bestimmt, das über einen Schlüssel 42 betätigbar ist, wie noch näher beschrieben wird. Auf diese Weise hält der Steuerhebel 36 über seinen inneren Arm 38 das Kegelrad 22 gegen die Federbelastung 31 in der aus Fig. 1 ersichtlichen zurückgeschobenen Axiallage, wo die Außenzahnung 23 über einen Luftspalt 43 von der Innenzahnung 13 entfernt ist. In Fig. 1 liegt daher eine "Freigabelage" der Sperrvorrichtung 10 vor.

Das Lenkschloß 41 besitzt einen als Baueinheit in sein Schloßgehäuse 47 einsetzbaren Schließzylinder 44, dessen wesentlichste Bauteile eine im Schloßgehäuse 47 festgehaltene Zylinderführung 45 und ein darin drehbarer Zylinderkern 46 sind. Zum Schutz ist diese Baueinheit 44 mit ihrem aus dem Schloßgehäuse 47 herausragenden Bereich durch eine hier mehrteilige Panzerkappe 48 abgedeckt. Durch ein Schlüsselloch in der Kappe 48 läßt sich der Schaft des Schlüssels 42 in einen Schlüsselkanal 49 des Zylinderkerns 46 einführen.

Durch den Schlüssel 42 kann der Zylinderkern 46 in verschiedene Drehstellungen überführt werden, die den verschiedenen benötigten Schaltpositionen eines Zündschalters 40 entsprechen. In den Fig. 1 und 2 ist eine Ausgangsstellung gezeigt, wo federbelastete, strichpunktiert in Fig. 1 und 2 angedeutete Zuhaltungen im Zylinderkern 46 in Ausrichtung mit Sperrnuten in der Zylinderführung 45 liegen, in welche sie in diesem Fall aufgrund ihrer Federkraft einfahren könnten, wenn der Schlüssel 42 herausgezogen wäre. In dieser Ausgangs-Drehstellung läßt sich der Schlüssel 42 in den Schlüsselkanal 49 ein- bzw. ausschieben, weil die Zuhaltungen in die Sperrnuten hineinspielen können. Bei ordnungsgemäß eingestecktem Schlüssel 42 sind die Zuhaltungen auf den Durchmesser des Zylinderkerns 46 einsortiert, weshalb dann der Zylinderkern 46 über den Schlüssel 42 in verschiedene andere, nicht näher gezeigte Drehstellungen überführt werden kann. Über eine noch näher zu beschreibende, mit dem Zylinderkern 46 mitdrehbare Schaltwelle 69 wird auf die elektrischen Kontakte des im Schloßgehäuse 47 angeordneten Zündschalters 40 eingewirkt.

Zu der Baueinheit 44 des Schließzylinders gehört noch eine Schlüsselabzugssicherung, welche folgende, anhand der Fig. 2 näher erläuterte Elemente umfaßt, deren Aussehen und Wirkungsweise bereits in der DE-OS 30 31 930 näher erläutert worden ist, deren Beschreibung insoweit zum Gegenstand der vorliegenden Anmeldung gemacht wird.

Im Bereich des Schlüsseleingangs geht vom Schlüsselkanal 49 eine Radialbohrung im Zylinderkern 46 aus, worin ein Querschieber 51 verschiebbar ist. Durch Einführen eines Schlüssels wird der Querschieber 51 in seiner Ausgangslage von Fig. 2 radial nach außen geschoben und fährt mit seiner äußeren Keilfläche 53 in eine Aussparung 54 am Oberende eines Längsschiebers 52. Die Aussparung 54 erstreckt sich über einen gewissen Drehbereich des Zylinderkerns 46, wird er überschritten, so kann der Längsschieber 52 aufgrund einer auf ihn einwirkenden Ausschubfeder 55 mit seinem äußeren Ende 56, wenn dem kein Hindernis entgegensteht, ausfahren in die aus Fig. 1 ersichtliche Ausschubposition. Wird dann der Zylinderkern 46 über den Schlüssel 42 wieder in die Ausgangsstellung von Fig. 1 zurückgedreht, so fährt der Drehschieber 53 jetzt über das obere aus Fig. 2 ersichtliche, eine Gegenschräge aufweisende innere Ende 57 des Längsschiebers 42 und blockiert dadurch die Ausschubposition des Längsschiebers gemäß Fig. 1.

Zum Lenkschloß 41 der Sperrvorrichtung 10 von Fig. 1 und 2 gehört auch noch das Drehhubglied 60, das in einer koaxial angeordneten Kammer 61 des Schloßgehäuses 47 im Sinne des aus Fig. 1 ersichtlichen Doppelpfeils 62 axial zum Zylinderkern 46 hubbeweglich ist. Trotz dieser axialen Hubbewegung 62 ist das Glied 60 mit dem Zylinderkern 46 drehfest verbunden, wofür der Zylinderkern 46 einen kantigen Kupplungsbolzen 58 trägt, der in eine komplementäre Kupplungsaufnahme 63 des Drehhubglieds 60 eingreift. Beim Drehen des Schlüssels im Sinne des aus Fig. 1 ersichtlichen Drehpfeils 64 wird folglich das Drehhubglied 60 konform mitgedreht.

Wie aus Fig. 2 zu erkennen ist, besitzt das Drehhubglied 60 eine stirnseitige Aussparung 65, in welche ein bei der Schnittführung von Fig. 2 unsichtbarer Axialnocken 59 einfallen kann. Im vorliegenden Fall ist an einander diametralen Stellen am inneren Stirnende der Zylinderführung 45 ein Paar solcher Axialnocken 59 in spiegelbildlicher Weise befestigt, weshalb die Aussparung 65 als diametraler Kanal an der zugekehrten Stirnseite des Drehhubgliedes 60 angeordnet ist, der gleichzeitig beide Axialnocken 59 aufnehmen kann. Die Axialnocken 59 besitzen, in einer Drehrichtung des Zylinderkerns 56 gesehen, eine Auflaufschräge 66, die mit dem Stirnende 67 des Drehhubglieds 60 zusammenwirkt, wenn der Zylinderkern 46 durch Schlüsselbetätigung im Sinne des Drehpfeils 64 von Fig. 1 gedreht wird. In der Drehendstellung des Zylinderkerns 46 sitzt das Stirnende 67 auf der Kuppe des Axialnockens 59. Das Drehhubglied 60 hat sich um die Hubstrecke 68 vom Zylinderkern 46 entfernt. Bei diesem Hub 68 wird das Drehhubglied 60 einerends über den Kupplungsbolzen 58 und die Aufnahme 63 und anderends über die angeformte Schaltwelle 69 in einer Lageröffnung des erwähnten Zündschalters 40 bzw. des Schloßgehäuses 47 axial geführt.

Aufgrund dieses Hubs 58 wird der erwähnte äußere Hebelarm 39 des Steuerhebels 36 mitgenommen, denn das Drehhubglied 60 besitzt eine umlaufende Ringnut 70, die eine Axialschulter 71 zur Anlage des Hebelarms 39 erzeugt. Zwecks Verringerung der Reibung kann der Hebelarm 39 mit einer Laufrolle 72 versehen sein, deren Rollachse in Verlaufsrichtung des Hebelarms 39 angeordnet ist und radial zur strichpunktiert in Fig. 1 angedeuteten Drehachse 74 des Zylinderkerns 46 angeordnet ist. Bei diesem Hub 68 wird folglich der Steuerhebel 36 im Sinne des Schwenkpfeils 73 von Fig. 1 bewegt, wobei der andere, innere Hebelarm 38 gegen den Ringabsatz 35 wirkt und dadurch das dortige Kegelrad 22 gegen die Federbelastung 31 der Wendelfeder 30 in die Freigabelage von Fig. 1 überführt. Die Lenksäule 11 läßt sich frei drehen. Das Fahrzeug befindet sich in fahrbereitem Zustand, der von der Drehstellung des Schlüssels 42 abhängt. Der Hub 58 wirkt sich natürlich auch an der Schaltwelle 69 aus, weshalb zusätzlich zu den bereits erwähnten Kontaktierungen infolge der Drehstellung des Zylinderkerns 46, auch noch ein in Fig. 1 angedeuteter Summer-Kontakt 75 im Zündschalter 40 geschlossen werden kann, der bei geöffneter Tür den im Lenkschloß 41 stecken gelassenen Schlüssel 42 optisch und/oder akustisch signalisiert.

Der Hub 68 des Drehhubglieds 60 ermöglicht es schließlich, daß der in einer parallelen Kammer zur Drehachse 74 längsgeführte Längsschieber 62 ausfahren kann. Hat nämlich aufgrund ausreichender Zylinderdrehung 64 der mit dem Zylinderkern 46 mitdrehbare Querschieber 61 die vorstehend im Zusammenhang mit Fig. 2 beschriebene Aussparung 54 freigegeben, so kann das äußere Ende 56 des Längsschiebers 52 an das Stirnende 67 des um die Hubstrecke 68 axial verschobenen Drehhubglieds 60 stoßen. Wird nun der Schlüssel 42 wieder, entgegen dem Drehpfeil 64 in die Ausgangsstellung von Fig. 1 zurückbewegt, so fährt jetzt die im Zusammenhang mit Fig. 2 erläuterte Keilfläche 53 auf das dort ersichtliche innere Ende 57 des Längsschiebers 52 auf und sichert dessen aus Fig. 1 ersichtliche Ausschubposition. Dieses Auffahren der Keilfläche 53 auf das Längsschieber-Ende 57 vollzieht sich schon während der Rückdrehung des Schlüssels 42, solange noch die Axialnocken 59 den Hub 68 sichern. Weil dadurch der Querschieber 51 den Längsschieber 52 hintergreift, wird die aus Fig. 1 ersichtliche Ausschubposition des Längsschiebers 52 auch dann aufrechterhalten, wenn die volle Ausgangsdrehstellung des Zylinderkerns 46 vorliegt, wo die erwähnten Axialnocken 59 mit der stirnseitigen Aussparung 65 des Drehhubglieds 60 ausgerichtet sind und daher an sich in die Einfallposition von Fig. 2 übergehen könnten. Dies wird aber durch die Schlüsselabzugssicherung 50 verhindert, die solange wirksam ist, wie der Schlüssel 42 im Schlüsselkanal 49 steckt.

In der wirksamen Position der Schlüsselabzugssicherung 50 wird also auch in der Ausgangsdrehstellung des Zylinderkerns 46 über den vom Querschieber 51 blockierten ausgefahrenen Längsschieber 52 die Hubstellung 68 des Drehhub glieds 60 gesichert, weshalb dadurch, über den Steuerhebel 36 die Freigabelage des Kegelrads 22 sichergestellt ist. Solange der Schlüssel 42 im Lenkschloß 41 steckt, bleibt die Freigabelage der erfindungsgemäßen Sperrvorrichtung 10 gesichert, sofern vorausgehend der Zylinderkern 46 die die verschiedenen Betriebszustände kennzeichnende Drehung 64 ausgeführt hat. Selbst, wenn versehentlich der Schlüssel 42 aus einem solchen Betriebszustand in seine Ausgangslage zurückgeführt werden sollte, bleibt die Lenksäule 11 frei drehbeweglich.

Erst, wenn der Schlüssel 42 abgezogen ist, kann, wie Fig. 2 verdeutlicht, der Querschieber 51 in den Schlüsselkanal 49 infolge der keilförmigen Fläche des inneren Längsschieber-Endes 57 zurückweichen und der ausgefahrene Längsschieber 52 wieder in die Zylinderführung 45 eingedrückt werden. Dies geschieht durch die Federbelastung 31 der Wendelfeder 30, die unter Berücksichtigung der Hebelübersetzung über den Steuerhebel 36 auf die Axialschulter 71 des Drehhubglieds 60 einwirkt und dieses, um die Hubstrecke 68 wieder in die Ausgangsposition mit dem inneren Stirnende der Zylinderführung 45 gemäß Fig. 2 zurückdrückt. Dies ist in Fig. 2 durch den Rückschwenkpfeil 73′ des Steuerhebels 36 verdeutlicht. Diese Rückschwenkung 73′ findet dann ein Ende, wenn die Außenzahnung 23 des Kegelrads 22 in die Innenzahnung 13 des Kegeltopfs 12 voll eingefahren ist. Dann ist die Wendelfeder 30 am weitesten entspannt; das Kegelrad 22 hat den inneren Endpunkt seiner aus Fig. 1 ersichtlichen Axialverschiebung 29 erreicht und hat sich um die aus Fig. 2 ersichtliche Axialstrecke 76 gegen den Kegeltopf 12 bewegt.

Bei dieser Kupplungsbewegung fahren die aus Fig. 3 erkennbaren Zahnspitzen 19 der Außenzahnung 23 zwischen die geneigten Flanken 18, 18′ der Innenzahnung 13 ein. Wegen der äußerst feinen Zahnteilung, die aufgrund der beispielsweise erwähnten Zahn-Anzahl hundert verschiedene Drehpositionen der Lenksäule 11 umfaßt, liegt praktisch bei jeder beliebigen Drehposition der Lenksäule eine Ausrichtung der Zähne vor, in der die Innen- und Außenzahnung 13, 23 glatt einfahren können. Wegen der erwähnten Neigungen 18, 18′ der Zahnflanken finden dabei automatisch auch minimale Korrekturbewegungen von weniger als zwei Bogengraden in diesem Ausführungsbeispiel statt. Die beiden komplementären Zahnungen 13, 23 schlüpfen ideal glatt in jeder Drehposition der Lenksäule 11 ein. Für diesen Einschlupf-Effekt ist nur eine verhältnismäßig kleine Federbelastung 31 erforderlich, die, abgesehen von der Reibung, nur noch die minimale Federkraft 55 am Längsschieber 52 zu überwinden braucht. Dadurch ist eine leichte Bedienung gewährleistet.

Die von der Wendelfeder 30 ausgeübte Kraft 31 braucht nicht in jedem Fall die Eingriffssicherung der Innen- und Außenzahnung 13, 23 der beiden Kegelteile 12, 22 gegenüber äußeren, auf die Lenksäule 11 einwirkenden Drehmomenten zu sichern. Der aus Fig. 2 ersichtliche Kegelwinkel 77 kann nämlich so bemessen sein, daß durch die zwischen den Zahnungen 13, 23 übertragenen Kräfte das Kegelrad 22 nicht axial zurückgestellt werden kann. Dies ist durch eine genaue Abstimmung zwischen dem Flankenwinkel der Zähne 16 und dem Kegelwinkel 77 möglich. Dabei ist der Kegelwinkel 77 groß genug, um die erwähnte Selbstjustierung der beiden Zahnungen 13, 23 zu ermöglichen. Es liegt der bereits erwähnte ideale Einschlupfeffekt der beiden Kegelteile 12, 22 vor.

Damit ist die Sperrlage von Fig. 2 erreicht und gesichert. Die Lenksäule 11 ist durch den Eingriff der beiden Kegelteile 12, 22 blockiert. Es sind längs des vollen Zahnungsumfangs der beiden Kegelteile 12, 22 sämtliche Zähne 16 wechselseitig im Eingriff, weshalb die gesamte Innen- und Außenzahnung 13, 23 zur Blockade der Lenksäule 11 beiträgt. Dadurch ist eine Drehsperre der Lenksäule 11 von außerordentlich großer Festigkeit erzielt, die selbst extremsten Drehmomenten standhalten kann. Wie abschließend noch näher beschrieben wird, kann die erfindungsgemäße Sperrvorrichtung 10 zugleich die Funktion einer "Drehmomentbegrenzung" erfüllen und die Zähne aus- und überrasten, um eine Beschädigung der Vorrichtung 10 durch hohe Kräfte zu vermeiden. Die beschriebene Blockade der beiden Kegelteile 12, 22 bleibt aber bestehen. Durch die zueinander komplementären Kegelteile 12, 22, die als Patrize und Matrize zusammenwirken, ist schließlich auch eine ideale raumsparende Anordnung erreicht. Die Kegelteile 12, 22 lassen sich nämlich innerhalb des Schutzrohres 20 unterbringen, wobei wegen der kleinen Hubstrecke 76 nur ein kurzer Axialabschnitt benötigt wird. Weil die Übertragung der Steuerung zwischen dem Lenkschloß 41 und dem beweglichen Kegelteil 22 nur einen verhältnismäßig kurzen Steuerhebel 36 erfordert, kann dieser in einer kurzen Abzweigung 78 des Schloßgehäuses 47 untergebracht sein. Hier kann das erwähnte Schwenkgelenk 37 des Steuerhebels 36 angeordnet sein. Der innere Hebelarm 38 wird zweckmäßigerweise gegabelt ausgebildet, so daß er an diametral gegenüberliegenden Stellen des Ringabsatzes 35 vom Kegelrad 22 zur Anlage kommt.

Die in Fig. 2 gezeigte Ausschubfeder 55 für den Längsschieber 52 stützt sich mit ihrem einen Ende am Boden einer im Längsschieber 52 eingearbeiteten Sack-Längsbohrung ab, während das andere Federende über einen in dieser Bohrung längsverschieblichen Stift 79 an der Innenseite der Panzerkappe 48 zur Anlage kommt. Dabei ist die Panzerkappe 48 in sich zweiteilig ausgebildet, nämlich aus einer mit dem Zylinderkern 46 drehfest verbundenen Zentralplatte und aus einem fest an der Zylinderführung 45 fixierten Umfangsring. Beim Drehen des Schlüssels 42 kann sich die Zentralplatte im Umfangsring verdrehen. Die ganze Baueinheit 44 des Schließzylinders umfaßt auch die Schlüsselabzugssicherung 50 und ist über einen nicht näher gezeigten, radialen Riegel im Schloßgehäuse 47 verankert, wie es in der DE-PS 32 49 501.3 näher beschrieben ist, worauf verwiesen wird.

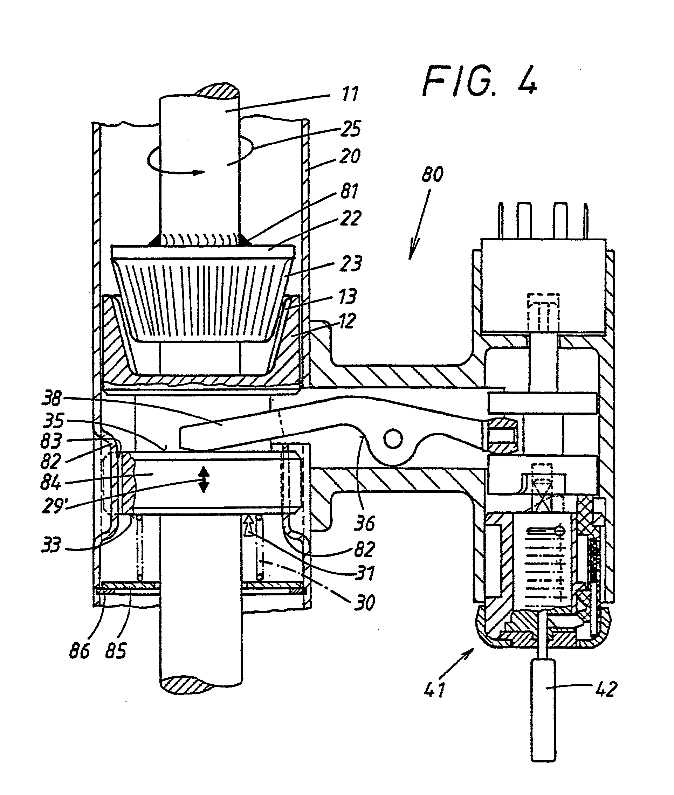

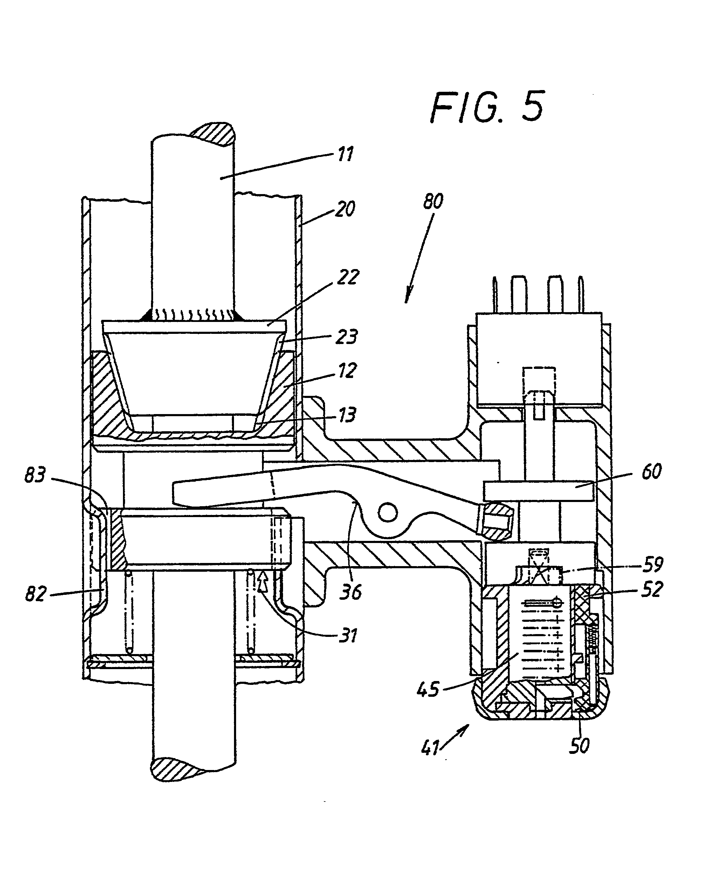

In den Fig. 4 und 5 ist in einer zu Fig. 1 und 2 entsprechenden Darstellung eine zweite Ausführungsform 80 der erfindungsgemäßen Sperrvorrichtung gezeigt, die teilweise einen mit dem ersten Ausführungsbeispiel übereinstimmenden Aufbau besitzt, weshalb insoweit die gleichen Bezugszeichen verwendet wurden und die bisherige Beschreibung gilt. Es genügt, die Unterschiede demgegenüber herauszustellen.

Ein Unterschied besteht zunächst darin, daß das mit der Außenzahnung 23 versehene Kegelrad 22 durch eine Schweißverbindung 81 od. dgl. axial fest mit der Lenksäule 11 verbunden ist, also zwar mitdrehbar, aber nicht axial verschieblich damit ist. Stattdessen ist wie der Doppelpfeil 29' in Fig. 4 verdeutlicht, der Kegeltopf 12 axial verschieblich, aber unverdrehbar längsgeführt; die Lenksäule 11 durchzieht mit seitlichem Spiel eine Zentralbohrung dieses Kegeltopfes 12. Die Längsführung des Kegeltopfs 12 wird in das Schutzrohr 20 integriert. Dazu können, im einfachsten Fall, in das Rohr eingeformte Längssicken 82 dienen, die Führungsschienen im Inneren des Schutzrohres 20 erzeugen, welche von Führungsschlitzen 83 am Kegeltopf 12 umgriffen werden. Die Führungsschlitze 83 sind hier in einem Flansch 84 des Kegeltopfs 12 eingeformt. Die eine Seite des Flansches 84 dient als Ringabsatz 35 wieder zur Abstützung des inneren, gegabelten Armendes 38 des Steuerhebels 36, während die andere Seite das bereits beschriebene Stirnende 33 für die Anlage der Wendelfeder 30 bildet. Das andere Ende der Wendelfeder 30 stützt sich an dem Schutzrohr 20 über eine Ringplatte 85 ab, die über einen Sprengring 86 od. dgl. in der Wand des Schutzrohres 20 festsitzt.

Die Wendelfeder 30 erzeugt die bereits beschriebene Federkraft 31, die hier bestrebt ist, den Kegeltopf 12 mit seiner Innenzahnung 13 mit der Außenzahnung 23 des axialfesten Kegelrades 22 in Eingriff zu bringen. Daran wird sie durch die vorbeschriebene analoge Wirkung des Steuerhebels 36 gehindert, weil dieser in der vorbeschriebenen Weise mit dem übereinstimmend zu Fig. 1 und 2 gestalteten Lenkschloß 41 zusammenwirkt solange der wieder in Ausgangslage zurückgedrehte Schlüssel 42 im Schloß steckt. Es liegt folglich, analog zu Fig. 1, die Freigabelage der Sperrvorrichtung 80 in Fig. 4 vor. Ein vorteilhafter Unterschied besteht aber darin, daß beim Drehen 25 der Lenksäule 11 keine Reibung zwischen dem inneren Hebelarm 38 und dem Ringabsatz 35 entsteht, weil der Kegeltopf 12 sich dabei nicht verdreht. Der Kegeltopf 12 ist nämlich, wie bereits erwähnt wurde, zwar axial verschieblich 29', aber aufgrund seiner Führungsmittel 82, 83 nicht verdrehbar. Auch hier kann der innere Hebelarm 38 gegabelt und an diametral gegenüberliegenden Seiten sich am Flansch 84 abstützen. Es wären auch andere Verbindungsmittel zwischen dem Hebelarm 38 und dem Kegeltopf 12 möglich.

Ist der Schlüssel gemäß Fig. 5 entfernt, so kann der Längsschieber 52 der vorstehend in Fig. 2 ausführlich beschriebenen Schlüsselabzugssicherung 50 das Drehhubglied 60 nicht mehr festhalten, wenn sich der Zylinderkern 46 in der aus Fig. 5 ersichtlichen Ausgangsdrehstellung befindet und daher nicht mehr vom Axialnocken 59 abgestützt wird. Aufgrund der Federkraft 31 wird nun der Steuerhebel 36 wieder soweit zurückgeschwenkt, bis die Innenzahnung 13 des Kegeltopfs 12 in der Außenzahnung 23 des Kegelrads 22 voll eingefahren ist. Es liegt jetzt die Sperrlage der erfindungsgemäßen Vorrichtung 80 vor. Auf die Lenksäule 11 ausgeübte Drehmomente werden über diese Zahnungen 23, 13 vom Kegelrad 22 auf den Kegeltopf 12 übertragen und von dort über die genannten Führungsmittel 82, 83 vom massiven Schutzrohr 20 aufgenommen und an die Fahrzeugkarosserie abgegeben.

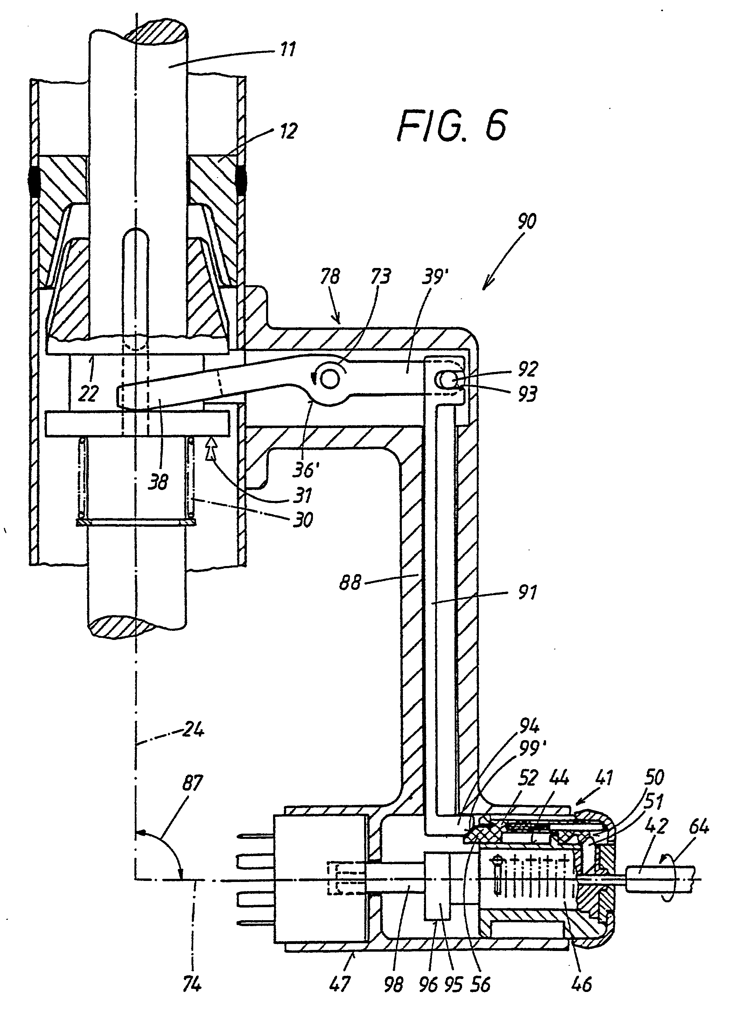

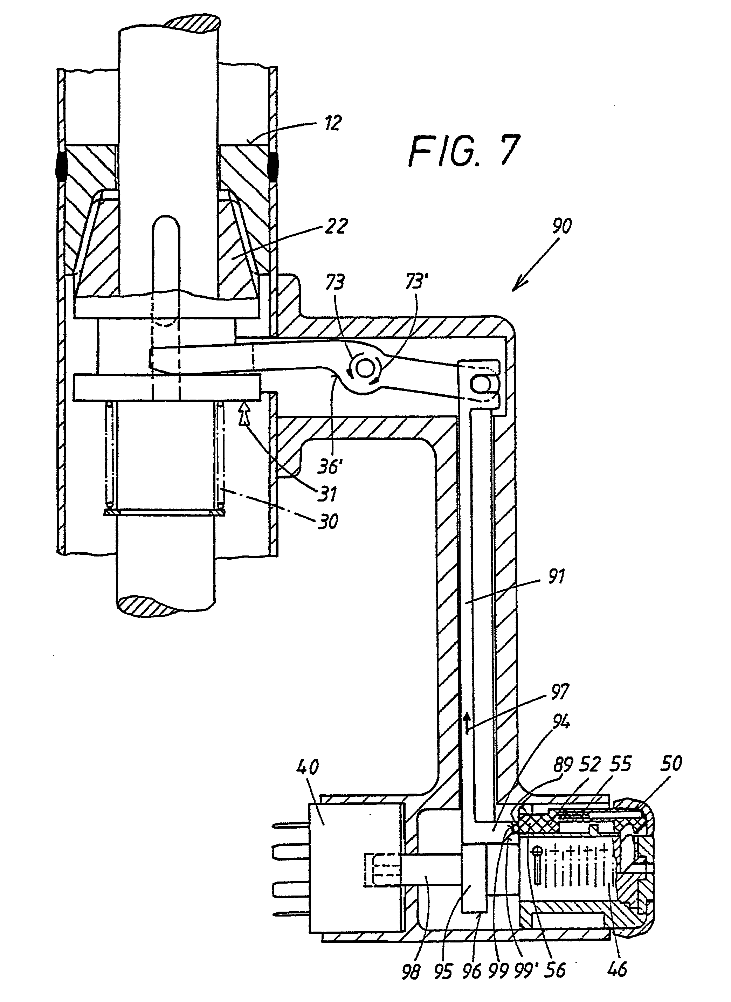

Fig. 6 und 7 zeigen ein drittes Ausführungsbeispiel 90 der erfindungsgemäßen Sperrvorrichtung, wo ebenfalls zur Benennung entsprechender Bauteile die bisherigen Bezugszeichen verwendet worden sind. Soweit Übereinstimmung besteht, gilt wieder die bisherige Beschreibung. Diese gilt insbesondere hinsichtlich der übereinstimmend mit Fig. 1 und 2 gestalteten Anordnung und Beweglichkeit der beiden Kegelteile 12, 22. Auch der innere Aufbau des Lenkschlosses 41 stimmt mit Fig. 1 und 2 überein, doch ermöglicht diese Vorrichtung 90 den Schließzylinder 44 mit seiner Drehachse 74, wie Fig. 6 zeigt, in einem gewünschten Winkel 87 zur Lenksäulenachse 24 anzuordnen. Dieser Winkel beträgt im vorliegenden Fall 90°, doch könnten auch andere Winkelwerte vorliegen.

Der wesentliche Unterschied besteht in der andersartigen Ausbildung des Steuergestänges, das zwischen dem Schließzylinder 44 einerseits und den beiden Kegelteilen 12, 22 andererseits angeordnet ist. Dabei wird ein Steuerhebel 36' verwendet, der hinsichtlich des inneren Hebelarms 38 zu Fig. 1 und 2 gleichgestaltet ist, dessen äußerer Hebelarm 39' dagegen erst mittelbar, über eine Schubstange 91 mit dem Lenkschloß 41 zusammenwirkt. Die Schubstange 91 ist über eine Gelenkverbindung 92, 93 mit dem Armende 39' gekuppelt. Und zwar sitzt am Armende 39' ein Gelenkzapfen 92, welcher von einem Ausschnitt 93 an diesem Stangenende umgriffen wird. Die Schubstange 91 verläuft in einem zu dem in Fig. 1 und 2 beschriebenen Gehäusezweig 78 entsprechend abgewinkelten Gehäusestück 88, das dann in das bereits in Fig. 1 und 2 beschriebene Schloßgehäuse 47 übergeht. Dort liegt auch das andere, abgewinkelte Ende des Schubstange 91 mit einem gegen den vorbeschriebenen Längsschieber 52 einer Schlüsselabzugssicherung 50 gerichteten Schenkel 94.

Die Schwenkbewegung 73 des Steuerhebels 36' erfolgt von einem drehfest mit dem Zylinderkern 46 Exzenter 95, dessen Radialvorsprung 96 als Steuerkurve mit dem Stangenende 94 zusammenwirkt, um dieses, von der in Fig. 7 ersichtlichen Einschubposition infolge Schlüsselbetätigung des Zylinderkerns 46 im Sinne des Schubpfeils 97 in die Ausschublage von Fig. 6 zu überführen. Der Exzenter 95 ist dabei, im Gegensatz zum Drehhubglied 60 von Fig. 1 und 2, nicht axial beweglich und besitzt folglich eine auch nicht axial bewegliche Schaltwelle 98 zur Kontaktsteuerung des damit verbundenen Zu ündschalters 40. Infolge ihrer Gelenkverbindung 92, 93 am Hebelarm 39 kommt es durch die Schubbewegung 97 der Stange 91 zu dem erwähnten Verschwenken 73 des Steuerhebels 36', wodurch sich die Freigabelage der beiden Kegelteile 12, 22 von Fig. 6 in Übereinstimmung mit Fig. 1 ergibt.

Der am Stangenende befindliche Schenkel 94 ist, wie aus Fig. 7 hervorgeht, besonders gestaltet, um mit der Schlüsselabzugssicherung 50 in einer entsprechend der DE-PS 32 36 190 beschriebenen Weise zusammenzuwirken, deren Beschreibung zum Gegenstand der vorliegenden Anmeldung gemacht wird. Der herausragende Teil des Längsschiebers 52 ist nämlich mit einem Schrägschnitt 89 versehen, wofür der Schubstangen-Schenkel 94 zwei Angriffsstellen 99, 99' besitzt, die wahlweise damit zusammenwirken.

Die erste Angriffsstelle besteht aus einer ebenen Stützfläche 99, die senkrecht zur Kraftrichtung der auf den Längsschieber 52 wirkenden Ausschubfeder 55 angeordnet ist und, gemäß Fig. 7, die entsprechend abgeflachte Spitze dieses Längsschieber-Endes 56 abstützt. Es liegt eine der Fig. 2 entsprechende Situation mit Sperrlage der beiden Kegelteile 12, 22 vor. Die auf das Kegelrad 22 einwirkende Federkraft 31 der dortigen Wendelfeder 30 hält den Steuerhebel 36' in seiner Rückschwenkposition 73' von Fig. 7 und die Stützfläche 99 hält das Längsschieber-Ende 96 in der aus Fig. 7 ersichtlichen Eindrückposition.

Erst, wenn aufgrund der Schlüsselbetätigung 64 der Zylinderkern 46 in seine verschiedenen Drehstellungen überführt worden ist und durch den Radialvorsprung 96 seines Exzenters 95 die Schubstange 91 in die aus Fig.6 ersichtliche Lage überführt worden ist, wirkt die andere Angriffsstelle 99' mit dem Längsschieber 52 zusammen. Diese Angriffsstelle besteht aus einer Neigungsfläche 99', wie aus Fig. 7 zu entnehmen ist, und wird von einem Schrägschnitt 89 am Längsschieber-Ende 56 hintergriffen, wenn der Zylinderkern 46 wieder in seine Ausgangsstellung von Fig. 6 zurückgedreht worden ist. Auf diese Weise wird die Schubstange 91 in ihrer aus Fig. 6 ersichtlichen Ausschubposition solange gesichert, als der Schlüssel 42 im Schlüsselkanal des Zylinderkerns 46 steckt. Es liegt eine mit der Fig. 1 vergleichbare Situation vor, nämlich die Freigabelage der beiden Kegelteile 12, 22, die aber mit anderen Mitteln bei dieser Sperrvorrichtung 80 erzielt worden ist. Die von der Feder 30 im Eingriffssinne des Kegelrads 22 wirkende Kraft 31 wird über den Steuerhebel und die Schubstange 91 vom hintergreifenden Längsschieber 52 aufgenommen. Eine Rückschwenkung 73' im Sinne von Fig. 7 kann noch nicht erfolgen.

Wird der Schlüssel 42 aber herausgezogen, so kann in der oben beschriebenen Weise der Querschieber 51 infolge der dabei wirksamen Keilflächen unter der Wirkung dieser Federkraft 31 zurückweichen. Die Neigungsverhältnisse sind nämlich unter Berücksichtigung des Reibungswerts bei den anliegenden Flächen 89, 99' so bemessen, daß diese Federkraft 31 über den Schenkel 94 der Schubstange 91 auf den Längsschieber 52 wieder eindrücken kann. Es findet wieder der Übergang in Fig. 7 statt, wo es zu einer Rückschwenkung 73' des Steuerhebels 36' kommt. Es liegt wieder die Sperrlage der beiden Kegelteile 12, 22 vor.

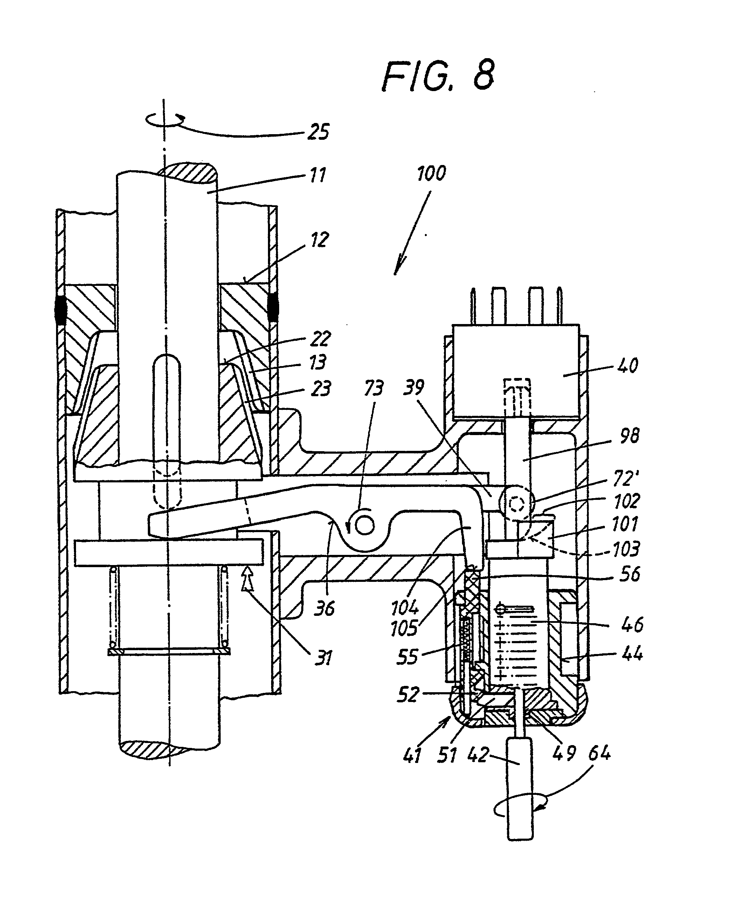

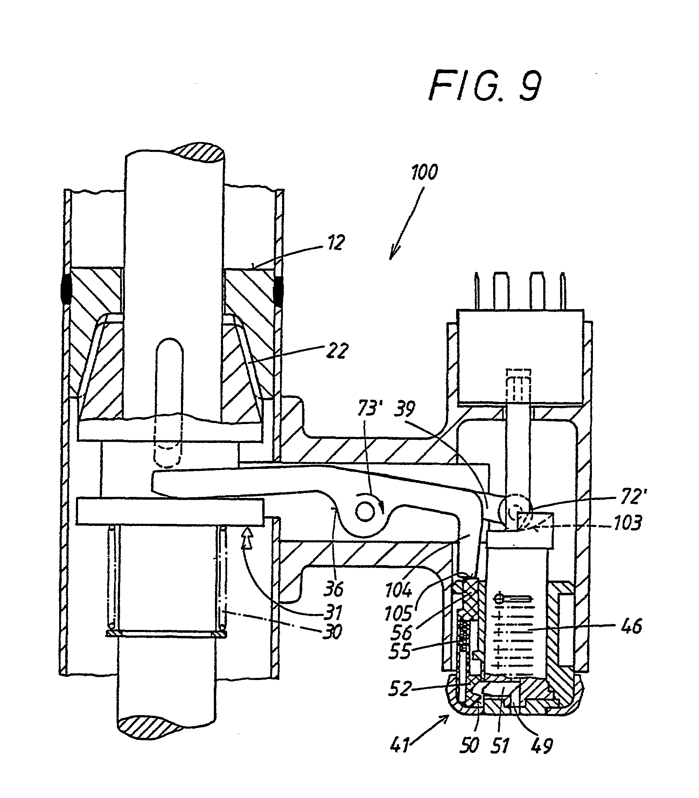

Die in den Fig. 8 und 9 gezeigte vierte Ausführungsform 100 der erfindungsgemäßen Sperrvorrichtung ist hinsichtlich der Form und Führung der beiden Kegelteile 12, 22 und der Schließzylinder-Baueinheit 44 gleich bzw. ähnlich aufgebaut wie das erste Ausführungsbeispiel gemäß Fig. 1 und 2, weshalb insoweit die dortige Beschreibung gilt. Es genügt daher auch hier, lediglich die Unterschiede hervorzuheben.

Die Drehbetätigung 64 des Zylinderkerns 46 wird auch hier nur von einem zweiarmigen Steuerhebel 36 übertragen, doch dient als Steuerkurve ein drehfest mit dem Zylinderkern 46 verbundenes Drehstück 101, das in einer mit Fig. 6 vergleichbaren Weise mit einer Schaltwelle 98 zur Drehsteuerung der Kontakte im Schalter 40 verbunden ist. In der aus Fig. 8 erkennbaren Ringzone 102 um diese Schaltwelle 98 herum trägt das Drehstück 101 in einem der Zylinderdrehung 64 entsprechenden Winkelbereich eine wendelartig ansteigende Axialfläche 103, auf welcher eine Laufrolle 72' läuft. Die Laufrolle 72' ist am äußeren Hebelarm 39 des Steuerhebels 36 drehgelagert,und zwar liegt die Drehachse senkrecht zur Verlaufsrichtung dieses Arms 39.

In der Ausgangsdrehstellung gemäß Fig. 9, wo der Schlüssel aus dem Lenkschloß 41 entfernt ist, befindet sich das flache Anfangsstück der Axialfläche 103 unter der Laufrolle 72', weshalb der Steuerhebel 36 in der bereits mehrfach beschriebenen Weise durch die von der Wendelfeder 30 auf das Kegelrad 22 ausgeübte Federkraft 31 seine Rückschwenkung 73' erfährt, welche die dortige Sperrlage der beiden Kegelteile 12, 22 kennzeichnet. Dies wirkt sich auch auf die Schlüsselabzugssicherung 50 aus, die, wie bereits erwähnt wurde, einen Fig. 1 und 2 ähnlichen Aufbau hat, aber demgegenüber mit anderen Bauteilen zusammenwirkt. Der äußere Hebelarm 39 des Steuerhebels 36' ist, gemäß Fig. 9, mit einem abgewinkelten Finger 104 versehen, an dessen Ende sich eine Schulter 105 befindet. An dieser Schulter 105 stützt sich das Stirnende 56 des Längsschiebers 52 ab, der von der erwähnten kegelseitigen Federkraft 31 gegen die Federkraft seiner eigenen Ausschubfeder 55 eingedrückt wird, weil der Querschieber 51 durch die dabei wirksam werdenden Keilflächen in den Schlüsselkanal 49 zurückweichen kann.

Ist der Schlüssel eingesteckt und im Sinne des Pfeils 64 drehbetätigt, so läuft die Rolle 72' über den wendelförmigen Anstieg auf eine axial angehobenen Endstufe der Axialfläche 103 auf, wodurch es zu der aus Fig. 8 ersichtlichen Verschwenkung 73 des Steuerhebels 36 kommt, der damit, gegen die Federkraft 31, das Kegelrad 22 in seine Freigabelage überführt, wo die Zahnungen 13, 23' außer Eingriff sind und die Drehung 25 der Lenksäule 11 ermöglichen. Durch diese Verschwenkung 73 ist aber auch der Finger 104 vom Zylinderkern 46 weggeschwenkt worden, so daß seine wegbewegte Schulter 105 einen Ausschub des Längsschiebers 52 aufgrund seiner Ausschubfeder 55 zuläßt. Beim Rückdrehen des Schlüssels 42 in die aus Fig. 8 ersichtliche Ausgangslage kommt es damit wieder zu einem Hintergriff des Querschiebers 51 über Keilflächen mit dem inneren Ende des Längsschiebers 52, wie es im Zusammenhang mit Fig. 1 bereits ausführlich beschrieben worden ist. Dadurch ist der Längsschieber 52 gegenüber einer Einschubbewegung blockiert.

Ist der Zylinderkern 46 durch die Schlüsselbetätigung wieder in die Ausgangsdrehstellung von Fig. 8 zurückgelangt, so hält das Längsschieber-Ende 56 in dieser ausgefahrenen Position den Hebel 36 über den Finger 104 verschwenkt. Die Freigabelage der beiden Kegelteile 12, 22 ist solange gesichert, als der Schlüssel 42 sich im Schlüsselkanal 49 befindet. Ist der Schlüssel 42 entfernt, so weicht wieder der Querschieber 51 in den Schlüsselkanal 49 aus und der Längsschieber 52 ist an seinem inneren Ende frei, um durch die kegelseitige Federkraft 31 in den Schließzylinder 44 zurückgedrückt zu werden. Dies geschieht über den Steuerhebel 36, weil der Finger 104 über seine Schulter 105 die Kraft der dortigen Ausschubfeder 55 überwindet und die aus Fig. 9 ersichtliche Rückverschwenkung 73' unter Eindrücken des Längsschiebers 52 ausführt. Die Kegelteile 12, 22 befinden sich wieder in ihrer Sperrlage.

Mit der erfindungsgemäßen Sperrvorrichtung kann jede gewünschte Geometrie der Lenkschloßachse 74 bezüglich der Lenksäulen-Achse 24 verwirklicht werden. Wie in den vorausgehenden Ausführungsbeispielen gezeigt, kann der Steuerhebel gerade oder als Winkelhebel ausgebildet oder mit einer Umlenkung 91 ausgerüstet sein.

Schließlich kann die erfindungsgemäße Sperrvorrichtung, ohne daß weitere Bauteile erforderlich wären, zugleich die Funktion einer Drehmomentbegrenzung erfüllen, um eine Beschädigung der Bauelemente bei einer extremen Gewaltanwendung der gesperrten Lenksäule 11 zu verhindern. Bei einem bestimmten gewaltsamen Drehmoment, von z.B. 25 mkp, wird das gesperrte Lenkrad vorübergehend drehbar, ohne daß das Fahrzeug für den Dieb lenkbar wird. Dazu werden die Kegelwinkel 77, ferner der Zahnwinkel zwischen den Flanken 18, 18' der ein Dreieckprofil 17 aufweisenden Zähne 16 und schließlich die Federkraft der zwischen den Kegelteilen 12, 23 wirksamen Kupplungsfeder 30 so dimensioniert, daß beim Überschreiten dieses Grenzdrehmoments die eingekuppelten komplementären Zahnungen 13, 23 wie Rasthaltungen fungieren, nämlich vorübergehend gegen die Federkraft 91 ausrasten und zahnweise überspringen. Die Sperrlage der beiden Kupplungsteile 12, 23 bleibt aber danach unverändert bestehen. Das Fahrzeug ist nach wie vor nicht lenkbar. Die Kegelteile 12, 22 mit ihren Zahnungen 13, 23 können aus Stahl im Fließpreßverfahren hergestellt werden. Das Zahnprofil 17 kann einen Zahnwinkel von ca. 60° aufweisen, während der Kegelwinkel 77 bei etwa 30° liegt. Die Kupplungsfeder 30 ist hinsichtlich der ausgeübten Federkraft 31 nur so stark dimensioniert, daß berechtigte Personen mit dem Schlüssel 42 über das Lenkschloß 41 noch gut die eingekuppelten Kegelteile 12, 22 außer Eingriff bringen können. Ein Komfort bei der Schlüsselbetätigung 64 ist damit gegeben.

**Bezugszeichenliste:**

10 Sperrvorrichtung (Fig. 1 und 2)
11 Lenksäule
12 matrizenförmiger Kegelteil, Kegeltopf
13 Innenzahnung
14 Topfboden von 12
15 Axialbohrung in 12
16 Zahn von 13
17 Dreieckprofil von 16
18 linke Zahnflanke
18' rechte Zahnflanke
19 Zahnspitze
19' Zahngrund
20 Schutzrohr
21 Schweißbefestigung bei 20
22 patrizenförmiger Kegelteil, Kegelrad
23 Außenzahnung
24 Lenksäulen-Achse
25 Drehpfeil von 11
26 Längsführungsmittel, Längsnut
27 Längsführungsmittel, Feder
28 Zentralbohrung in 22
29 Axialverschiebungs-Pfeil von 22 (Fig. 1)
29' Axialverschiebungs-Pfeil von 12 (Fig. 4)
30 Wendelfeder
31 Federkraft, Federbelastung
32 Sprengring
33 Stirnende von 22
34 Ringnut in 22
35 Ringabsatz in 22
36 Steuerhebel, (Fig. 1 bis 5, 8 bis 9)
36' Steuerhebel (Fig. 6, 7)
37 Schwenkgelenk
38 innerer Hebelarm von 36
39 äußerer Hebelarm von 36
39' äußerer Hebelarm von 36' (Fig. 6, 7)
40 Zündschalter
41 Lenkschloß
42 Schlüssel
43 Spalt
44 Schließzylinder-Baueinheit
45 Zylinderführung von 44
46 Zylinderkern von 44
47 Schloßgehäuse von 41

48 Panzerkappe von 44
49 Schlüsselkanal von 46
50 Schlüsselabzugssicherung
51 Querschieber von 50
52 Längsschieber von 50
53 Keilflächen zwischen 52, 51
54 Aussparung in 52
55 Ausschubfeder für 52
56 äußeres Ende, Stirnende von 52
57 inneres Ende von 52
58 kantiger Kupplungsbolzen
59 Axialnocken an 45 (Fig. 1, 2)
60 Drehhubglied (Fig. 1, 2)
61 Kammer für 60
62 Hubbewegungs-Pfeil für 60
63 Kupplungsaufnahme für 58
64 Drehpfeil von 42
65 Aussparung für 59 (Fig. 1, 2)
66 Auflaufschräge von 59 (Fig. 2)
67 Stirnende von 60
68 Hubstrecke von 60
69 Schaltwelle an 60
70 Ringnut in 60
71 Axialschulter an 60
72 Laufrolle an 39 (Fig. 1)
72' Laufrolle an 39 (Fig. 8, 9)
73 Schwenk-Pfeil von 36 bzw. 36'
73' Rückschwenk-Pfeil von 36 bzw. 36'
74 Drehachse von 46
75 Summer-Kontakt in 40
76 Axialhubstrecke von 22 (Fig. 2)
77 Kegelwinkel von 23 bzw. 13
78 Gehäuseabzweigung von 47
79 Abstütz-Stift für 55
80 Sperrvorrichtung (Fig. 4, 5)
81 Schweißverbindung
82 Längssicke in 20, Führungsschiene für 83
83 Führungsschlitz in 84
84 Flansch an 12
85 Ringplatte
86 Sprengring für 85
87 Winkel zwischen 24, 74 (Fig. 6)
88 Gehäusestück für 91 (Fig. 6)
89 Schrägschnitt von 52 (Fig. 7)
90 Sperrvorrichtung (Fig. 6, 7)
91 Schubstange
92 Gelenkzapfen an 39', Gelenkverbindungsteil
93 Ausschnitt an 91, Gelenkverbindungsteil
94 Schenkel an 91
95 Exzenter
96 Radialvorsprung von 95
97 Schubpfeil für 91
98 Schaltwelle an 96 bzw. 101 (Fig. 7, 8)
99 Angriffsstelle, Stützfläche für 56 (Fig. 7)
99 Angriffsstelle, Neigungsfläche für 89 (Fig. 6, 7)
100 Sperrvorrichtung (Fig. 8, 9)
101 Drehstück an 46 (Fig. 8, 9)
102 Ringzone von 101
103 Axialfläche von 101
104 Finger an 39 (Fig. 8, 9)
105 Schulter von 104

**Patentansprüche**

1.) Sperrvorrichtung (10) für Lenksäulen (11) in Fahrzeugen, umfassend

ein drehfest auf der Lenksäule sitzendes Sperr-Rad mit zahnartigen Radialvorsprüngen

und ein Sperrglied, das durch Schlüsselbetätigung (64) eines mit einem Schließzylinder (46) und mit einer Steuerkurve (59) ausgerüsteten Lenkschlosses (41) in zwei Stellungen überführbar ist, nämlich

in eine zwischen die Radialvorsprünge eingreifende wirksame Stellung (Sperrlag, Fig. 2 ) und

in eine das Sperr-Rad freigebende, unwirksame Stellung (Freigabelage, Fig. 1),

dadurch gekennzeichnet,

daß ein mit einer Innenzahnung (13) versehener Kegeltopf (matrizenförmiger Kegelteil 12) koaxial zu einem eine Außenzahnung (22) aufweisenden Kegelrad (patrizenförmiger Kegelteil 23) angeordnet ist,

hinsichtlich der Lenksäule (11) der eine Kegelteil (12) koaxial (24) sowie unverdrehbar (21 bzw. 82,83) angeordnet, aber der andere (22) mitdrehbar (25) ist,

und ferner der eine Kegelteil (12 bzw. 22) eine feste Axialposition bezüglich der Lenksäule (11) einnimmt, aber der andere (22 bzw. 12) demgegenüber (11) durch die Schlüsselbetätigung (64) axial verschieblich (29 bzw. 29') ist

zwischen einer auf der gesamten Kegelmantelfläche beiden Kegelteile (12,22) vollzogenen Ineinanderfügung der zur Innen- und Außenzahnung (13,23) gehörenden Zähne (16) (Sperrlage) einerseits

und einer allseitigen axialen Lüftung (43) dieser Zähne (Freigabelage) andererseits.

2.) Vorrichtung nach Anspruch 1, dadurch gekennzeichnet, daß die Innen- und Außenzahnung (13,23) die gleiche Zahnteilung aufweisen.

3.) Vorrichtung nach Anspruch 1 oder 2, dadurch gekennzeichnet, daß die Innen- und Außenzahnung (13,23) zueinander komplementär gestaltete Zahnprofile (17) aufweisen und spielfrei ineinanderfügbar sind, (Fig. 2).

4.) Vorrichtung nach einem oder mehreren der Ansprüche 1 bis 3, dadurch gekennzeichnet, daß die beiden Kegelteile (12,22) das gleiche Zahnprofil (17) aufweisen.

5.) Vorrichtung nach einem oder mehreren der Ansprüche 1 bis 4, dadurch gekennzeichnet, daß die Flanken (18, 18') benachbarter ein Dreieckprofil (17) aufweisender Zähne (16) der Innen- und/oder Außenzahnung (13,23) aneinander (19') stoßen, (Fig. 3).

6.) Vorrichtung nach einem oder mehreren der Ansprüche 1 bis 5, dadurch gekennzeichnet, daß der Kegeltopf (12) ortsfest (21) angeordnet ist sowie die Lenksäule (11) radial (15) umschließt und das Kegelrad (22) mit der Lenksäule (11) mitdrehbar (26,27), auf der Lenksäule axial verschieblich (29) sowie gegen den Kegeltopf (12) federbelastet (31) ist, (Fig. 1 bis 3 und 6 bis 9).

7.) Vorrichtung nach einem oder mehreren der Ansprüche 1 bis 5, dadurch gekennzeichnet,

daß das Kegelrad (22) mitdrehbar sowie axial fest (81) mit der Lenksäule (11) verbunden ist

und der Kegeltopf (12) zwar unverdrehbar (82,83) aber axial längsverschieblich (29') bezüglich der Lenksäule (11) geführt sowie gegen das Kegelrad (22) federbelastet (31) ist, (Fig. 4, 5).

8.) Vorrichtung nach einem oder mehreren der Ansprüche 1 bis 7, dadurch gekennzeichnet,

daß ein, ein ortsfestes Schwenkgelenk (37) aufweisender, zweiarmiger Steuerhebel (36;36') mit seiner Schwenkebene (73;73') in einer Axialebene der Lenksäule (11) angeordnet ist,

der axial verschiebliche Kegelteil (22 bzw. 12) eine Angriffsstelle (35) für den einen, inneren Hebelarm (38) dieses Steuerhebels (36, 36') besitzt

und der andere, äußere Hebelarm (39, 39') dieses Steuerhebels unmittelbar (Fig. 8) oder mittelbar (Fig. 1, 6) mit der Steuerkurve (59;96;103) zusammenwirkt.

9.) Vorrichtung nach Anspruch 8, dadurch gekennzeichnet,

daß die Angriffsstelle für den inneren Hebelarm (38) aus einem axialen Ringabsatz (35) am beweglichen Kegelteil (22 bzw. 12) besteht

und dieser Ringabsatz (35) auf der gegenüberliegenden Axialseite bezüglich der Wirkungsrichtung (31) der auf den Kegelteil (22 bzw. 12) einwirkenden Federbelastung (31) angeordnet ist.

10.) Vorrichtung nach Anspruch 8 oder 9, dadurch gekennzeichnet,

daß die Steuerkurve von einem ortsfesten (45) Axialnocken (59) gebildet ist,

auf den ein Drehhubglied (60) bei Schlüsselbetätigung eines zum Schließzylinder (44) gehörenden Zylinderkerns (46) aufläuft,

das Drehhubglied (60) zwar mit dem Zylinderkern (46) mitdrehbar gekuppelt (58, 63), aber demgegenüber (46) axial hubbeweglich (62) geführt ist sowie eine Schulter (71) für den äußeren Hebelarm (39) zur Schwenkbewegung (73,73') des Steuerhebels (36) besitzt

und das Drehhubglied (60) eine in der Ausgangsdrehstellung des Zylinderkerns (46) ausgerichtete Einfallstelle (65) für den Axialnocken (59) aufweist, (Fig. 1 bis 5).

11.) Vorrichtung nach Anspruch 10, mit einer Schlüsselabzugssicherung (50),

bestehend aus einem in den Schlüsselkanal (49) einrückbaren Querschieber (51) und aus einem über Keilflächen (53;57,54) daran abstützbaren, achsparallel (74) zum Zylinderkern (46) längsgeführten, im Ausschubsinne federbelasteten (55) Längsschieber (52),

dadurch gekennzeichnet,

daß das äußere Ende (56) des Längsschiebers (52) an einer axialen Stirnfläche (67) des Drehhubglieds (60) abstützbar ist und diese Stirnfläche (67) von der für den äußeren Hebelarm (39) bestimmten Axialschulter (71) weggerichtet ist, (Fig. 1 bis 5).

12.) Vorrichtung nach Anspruch 8 oder 9, dadurch gekennzeichnet,

daß die Steuerkurve von der bereichsweise wendelartig ansteigenden Axialfläche (103) eines drehfest mit einem zum Schließzylinder (44) gehörenden Zylinderkern (46) verbundenen Drehstücks (101) erzeugt ist

und der äußere Hebelarm (39) zur Schwenkbewegung (73, 73') des Steuerhebels (36) an dieser Axialfläche geführt ist, (Fig. 8, 9).

13.) Vorrichtung nach Anspruch 12 mit einer Schlüsselabzugssicherung (50),

bestehend aus einem in den Schlüsselkanal (49) eindrückbaren Querschieber (51) und aus einem über Keilflächen (53;57,54) daran abstützbaren, achsparallel (74) zum Zylinderkern (46) längsgeführten, im Ausschubsinne federbelasteten (55) Längsschieber 52),

dadurch gekennzeichnet,

daß das äußere Ende (56) des Längsschiebers (52) an einer Schulter (105) des Steuerhebels (36) axial abgestützt ist, (Fig. 8, 9).

14.) Vorrichtung nach einem oder mehreren der Ansprüche 10 bis 13, dadurch gekennzeichnet, daß der äußere Hebelarm (39) des Steuerhebels (36) mit einer Laufrolle (72 bzw. 72') versehen ist, (Fig. 1 bis 5, 8, 9).

15.) Vorrichtung nach Anspruch 8 oder 9, dadurch gekennzeichnet,

daß die Steuerkurve von dem Radialvorsprung (96) eines Exzenters (95) erzeugt ist,

der drehfest mit dem Zylinderkern (46) des Schließzylinders (44) verbunden ist,

und der Exzenter (95) mit dem einen Ende (94) einer Schubstange (91) zusammenwirkt,

deren anderes Ende (93) über eine Gelenkverbindung (92) mit dem äußeren Hebelarm (39') des Steu-erhebels (36') verbunden ist, (Fig. 6, 7).

16.) Vorrichtung nach Anspruch 15, mit einer Schlüsselabzugssicherung (50),

bestehend aus einem in den Schlüsselkanal (49) eindrückbaren Querschieber (51) und aus einem über Keilflächen (53;57,54) daran abstützbaren, achsparallel (74) zum Zylinderkern (46) längsgeführten, im Ausschubsinne federbelasteten (55) Längsschieber (52),

dadurch gekennzeichnet,

daß die Schubstange (91) zwei Angriffsstellen (99,99′) für das einen Schrägschnitt (89) aufweisende äußere Ende (56) des Längsschiebers (52) besitzt, bestehend aus

einer den Längsschieber (52) in einer definierten Eindrückposition haltenden axialen Stützfläche (99) einerseits (Sperrlage der Kegelteile, Fig. 7)

und aus einer vom Schrägschnitt (89) des Längsschiebers (52) hintergriffenen, komplementären Neigungsfläche (99′) andererseits, (Freigabelage der Kegelteile, Fig. 6).

17.) Vorrichtung nach einem oder mehreren der Ansprüche 1 bis 16, dadurch gekennzeichnet,

daß der Kegelwinkel (77) der beiden Kegelteile (12,22), der Zahnwinkel (17) ihrer Innen- und Außenzahnungen (13,23) und ihre Federbelastung (31) so dimensioniert sind,

daß beim Überschreiten eines bestimmten auf die Lenksäule (11) ausgeübten Grenz-Drehmoments (25) die Zahnungen (13, 23) vorübergehend überrasten.

## Claims

1. A locking device (10) for steering columns (11) in vehicles comprising:
a locking wheel with tooth-like radial projections, which is non-rotatably carried on the steering column, and
a locking member which can be moved by key actuation (64) of a steering lock (41) provided with a lock cylinder (46) and a control cam (59) into two positions, namely
into an operative position of engaging between the radial projections (locking position, Figure 2), and
into an inoperative position of releasing the locking wheel (release position, Figure 1),
characterised in that
a conical cip-shaped member (female conical member 12) provided with an internal tooth configuration (13) is arranged coaxially with respect to a conical wheel member (male conical member 23) having an external tooth configuration (22),
in relation to the steering column (11) the one conical member (12) is arranged coaxially (24) but non-rotatably (21 or 82, 83) but the other (22) is rotatable therewith (25),
and in addition the one conical member (12 or 22) occupies a fixed axial position relative to the steering column (11) but the other (22 or 12 respectively) is axially displaceable (29 or 29′) with respect thereto (11) by key actuation (64),

between interengagement, over the entire conical peripheral surface of both conical members (12, 22), in respect of the teeth (16) belonging to the internal and external tooth configurations (13, 23) (locking position) on the one hand and
axial clearance (43) on all sides between said teeth (release position) on the other hand.

2. A device according to claim 1 characterised in that the internal and external tooth configurations (13, 23) have the same tooth pitch.

3. A device according to claim 1 or claim 2 characterised in that the internal and external tooth configurations (13, 23) have tooth profiles (17) which are of complementary configurations to each other and can be engaged one into the other without play (see Figure 2).

4. A device according to one or more of claims 1 to 3 characterised in that the two conical members (12, 22) have the same tooth profile (17).

5. A device according to one or more of claims 1 to 4 characterised in that the flanks (18, 18′) of adjacent teeth (16) of the internal and/or external tooth configurations (13, 23), which teeth are of a triangular profile (17), but against each other (19′) (Figure 3).

6. A device according to one or more of claims 1 to 5 characterised in that the conical cup-shaped member (12) is arranged stationarily (21) and radially (15) embraces the steering column (11), and the conical wheel member (22) is rotatable (26, 27) with the steering column (11), is axially displaceable (29) on the steering column and is spring-loaded (12) towards the conical cup-shaped member (12) (Figures 1 to 3 and 6 to 9).

7. A device according to one or more of claims 1 to 5 characterised in that the conical wheel member (22) is connected to the steering column (11) rotatably therewith and in axially fixed relationship (81), and the conical cup-shaped member (12) is carried non-rotatably (82, 83) but axially slidably (29′) with respect to the steering column (11) and is spring-loaded (31) towards the conical wheel member (22) (Figures 4 and 5).

8. A device according to one or more of claims 1 to 7 characterised in that a two-armed control lever (36; 36`) having a stationary pivotal connection (37) is arranged with its plane of the steering column (11), the axially displaceable conical member (22 or 12) has an engagement location (35) for the one, inner lever arm (38) of said control lever (36, 36′), and the other, outer lever arm (39, 39′) of said control lever cooperates directly (Figure 8) or indirectly (Figures 1 and 6) with the control cam (59; 96; 103).

9. A device according to claim 8 characterised in that the engagement location for the inner lever arm (38) comprises an axial annular step (35) on the movable conical member (22 or 12), and said annular step (35) is arranged on the oppositely disposed axial side with respect to the operational direction (31) of the spring loading (31) which acts on the conical member (22 or 12).

10. A device according to claim 8 or claim 9 characterised in that the control cam is formed by a stationary (45) axial projection (59) on to which a rotary lift member (60) runs upon key actuation of a cylinder core (46) belonging to the lock cylinder (44), the rotary lift member (60) is coupled (58, 63) to the cylinder core (68) to be rotatable therewith but is guided for an axial lifting movement (62) relative thereto (46) and has a shoulder (71) for the outer lever arm (39) for the pivotal movement (73, 73') of the control lever (36), and the rotary lift member (60) has a location (65) for the axial projection (59) to drop thereinto, in the initial rotary position of the cylinder core (46) (Figures 1 to 5).

11. A device according to claim 10 having a means (50) for preventing withdrawal of the key comprising a transverse slider (51) which can be moved into the key passage (49) and a longitudinal slider (52) which can bear against the transverse slider by way of taper surfaces (53; 57, 54) and which is longitudinally guided in parallel-axis relationship (74) with the cylinder core (46) and which is spring-loaded (55) in the direction of being pushed out, characterised in that the outer end (56) of the longitudinal slider (52) can bear against an axial face (67) of the rotary lift member (60), and said face (67) is directed away from the axial shoulder (71) which is provided for the outer lever arm (39) (Figures 1 to 5).

12. A device according to claim 8 or claim 9 characterised in that the control cam is produced by the axial face (103), which rises in a helical configuration in a region-wise manner, of a rotary portion (101) non-rotatably connected to a cylinder core (46) belonging to the lock cylinder (44), and the outer lever arm (39) is guided against said axial face to produce the pivotal movement (73, 73') of the control lever (36) (Figures 8 and 9).

13. A device according to claim 12 with a means (50) for preventing withdrawal of the key comprising a transverse slider (51) which can be pressed into the key passage (49) and a longitudinal slider (52) which can bear against the transverse slider by way of taper surfaces (53; 57, 54) and which is longitudinally guided in parallel-axis relationship (74) with the cylinder core (46) and which is spring-loaded (55) in the direction of being pushed out, characterised in that the outer end (56) of the longitudinal slider (52) is axially supported against a shoulder (105) on the control lever (36) (Figures 8 and 9).

14. A device according to one or more of claims 10 to 13 characterised in that the outer lever arm (39) of the control lever (36) is provided with a roller (72 or 72') (Figures 1 to 5, 8 and 9).

15. A device according to claim 8 or claim 9 characterised in that the control cam is produced by the radial projection (96) of an eccentric (95) which is non-rotatably connected to the cylinder core (46) of the lock cylinder (44), and the eccentric (95) cooperates with the one end (94) of a thrust rod (91) the other end (93) of which is connected by way of a pivot connection (92) to the outer lever arm (39') of the control lever (36') (Figures 6 and 7).

16. A device according to claim 15 having a means (50) for preventing withdrawal of the key, comprising a transverse slider (51) which can be pressed into the key passage (49) and a longitudinal slider (52) which can bear against the transverse slider by way of taper surfaces (53; 57, 54) and which is longitudinally guided in parallel-axis relationship (74) with the cylinder core (46) and which is spring-loaded (55) in the direction of being pushed out, characterised in that the pushrod (91) has two engagement locations (99, 99') for the outer end (56) of the longitudinal slider (52), which has a bevel (89), comprising an axial support face (99) for holding the longitudinal slider (52) in a defined pressed-in position, on the one hand (locking position of the conical members, Figures 7), and a complementary inclined face (99') behind which the bevel (89) of the longitudinal slider (52) engages, on the other hand (release position of the conical members, Figure 6).

17. A device according to one or more of claims 1 to 16 characterised in that the cone angle (77) of the two conical members (12, 22), the tooth angle (17) of the internal and external tooth configurations (13, 23) thereof and the spring loading (31) thereof are so dimensioned that when a given limit torque (25) applied to the steering column (11) is exceeded, the teeth (13, 23) temporarily pass over each other.

## Revendications

1. Dispositif de blocage (10) pour colonnes de direction (11) de véhicules, comprenant une roue de blocage solidaire en rotation de la colonne de direction et comportant des saillies radiales en forme de dents et une pièce de blocage qui, par l'actionnement (64) par clef d'une serrure de direction (41) équipée d'un barillet (46) et d'un profil de came (59), est conçue pour pouvoir être amenée à deux positions, à savoir à une position active en prise entre les saillies radiales (position de blocage, figure 2) et à une position de repos, libérant la roue de blocage (position de libération, figure 1), caractérisé en ce qu'un manchon conique (tronc de cône femelle 12) muni d'une denture intérieure (13) est disposé de façon coaxiale par rapport à une roue conique (tronc de cône mâle 23) comportant une denture extérieure (22), l'un (12) des troncs de cône est disposé de façon coaxiale (24) par rapport à la colonne de direction (11) sans pouvoir tourner (21 ou 82, 83) tandis que l'autre tronc de cône (22) en est solidaire en rotation (25), et, en outre, l'un des troncs de cône (12 ou 22) occupe une position axiale fixe par rapport à la colonne de direction (11), tandis que l'autre (22 ou 12) est déplaçable axialement (29 ou 29') par rapport à celle-ci (11) au moyen de l'actionnement (64) par clef, entre, d'une part, une position entièrement engrenée des dents (16) des dentures intérieure et extérieure (13, 23) sur toute la surface conique des deux troncs de cône (12, 22) (position de blocage) et, d'autre part, un espacement axial (43) de l'ensemble de ces dents (position de libération).

2. Dispositif selon la revendication 1, caractérisé en ce que les dentures intérieure et extérieure (13, 23) possèdent le même pas.

3. Dispositif selon la revendication 1 ou 2, caractérisé en ce que les dentures intérieure et extérieure (13, 23) possèdent des profils de denture (17) complémentaires et sont agencées de manière à pouvoir être engrenées sans jeu (figure 2).

4. Dispositif selon l'une ou plusieurs des revendications 1 à 3, caractérisé en ce que les deux troncs de cône (12, 22) possèdent le même profil de denture (17).

5. Dispositif selon l'une ou plusieurs des revendications 1 à 4, caractérisé en ce que les faces (18, 18') de dents (16) voisines, ayant un profil triangulaire (17), des dentures intérieure et/ou extérieure (13, 23) se rencontrent (19') (figure 3).

6. Dispositif selon l'une ou plusieurs des revendications 1 à 5, caractérisé en ce que
le manchon conique (12) est fixe (21) et entoure radialement (15) la colonne de direction (11),
et la roue conique (22) est solidaire en rotation (26, 27) de la colonne de direction (11), déplaçable axialement (29) sur la colonne de direction et est sollicitée élastiquement (31) vers le manchon conique (12) (figures 1 à 3 et 6 à 9).

7. Dispositif selon l'une ou plusieurs des revendications 1 à 5, caractérisé en ce que la roue conique (22) est solidaire en rotation et axialement (81) de la colonne de direction (11)
et le manchon conique (12), bien qu'immobile en rotation (82, 83), est déplaçable longitudinalement (29') de façon axiale par rapport à la colonne de direction (11) et est sollicitée élastiquement (31) vers la roue conique (22) (figures 4, 5).

8. Dispositif selon l'une ou plusieurs des revendications 1 à 7, caractérisé en ce que
un levier de commande (36; 36') à deux bras, comprenant un pivot fixe (37), est disposé de façon que son plan de pivotement (73; 73') soit dans un plan axial par rapport à la colonne de direction (11)
le tronc de cône (22 ou 12) déplaçable axialement possède une prise (35) pour l'un des bras, le bras intérieur (38), dudit levier de commande (36; 36')
et l'autre bras (39, 39'), extérieur, dudit levier de commande coopère directement (figure 8) ou indirectement (figures 1, 6) avec le profil de came (59; 96; 103).

9. Dispositif selon la revendication 8, caractérisé en ce que
la prise pour le bras de levier intérieur (38) est constituée par un épaulement annulaire axial (35) du tronc de cône mobile (22 ou 12)
et cet épaulement annulaire (35) est situé sur la face axiale opposée au sens d'actionnement (31) du moyen de sollicitation élastique (31) agissant sur le tronc de cône (22 ou 12).

10. Dispositif selon la revendication 8 ou 9, caractérisé en ce que
le profil de came est formé par une came axiale (59) fixe (45), que parcourt une pièce (60) mobile vers le haut par rotation lors de l'actionnement par clé d'un corps de barillet (46) appartenant au barillet de serrure (44),
la pièce (60) mobile vers le haut par rotation, bien que solidaire en rotation (58, 63) du corps de barillet (46), est guidée axialement dans un mouvement ascendant (62) par rapport à celui-ci (46) et comporte un épaulement (71) destiné au bras de levier extérieur (39) pour assurer le basculement (73, 73') du levier de commande (36)
et la pièce (60) mobile vers le haut par rotation comprend un emplacement de prise (65), pour la came axiale (59), en coïncidence lorsque le corps de barillet (46) est dans sa position angulaire initiale (figures 1 à 5).

11. Dispositif selon la revendication 10, comportant un moyen de sûreté (50) contre le retrait de la clef,
formé d'un coulisseau transversal (51) agencé de manière à pouvoir être introduit dans le canal (49) de la clef et d'un coulisseau longitudinal (52) qui est agencé de manière à pouvoir s'appuyer contre le coulisseau transversal par des surfaces de coin (53; 57, 54), qui s'étend de façon longitudinale parallèlement à l'axe (74) du corps de barillet (46) et qui est sollicité élastiquement (55) dans le sens de son retrait,
caractérisé en ce que l'extrémité extérieure (56) du coulisseau longitudinal (52) est agencée de manière à pouvoir être mise en appui contre une face frontale axiale (67) de la pièce (60) mobile vers le haut par rotation
et cette face frontale (67) est disposée à distance de l'épaulement axial (71) prévu pour le bras de levier extérieur (39) (figures 1 à 5).

12. Dispositif selon la revendication 8 ou 9, caractérisé en ce que
le profil de came est constitué par la surface axiale (103), qui s'élève localement en spirale, d'une pièce tournante (101) solidaire en rotation d'un corps de barillet (46) appartenant au barillet de serrure (44)
et le bras de levier extérieur (39) est conduit par cette surface axiale pour le basculement (73, 73') du levier de commande (36) (figures 8, 9).

13. Dispositif selon la revendication 12, comportant un moyen de sûreté (50) contre le retrait de la clef,
formé d'un coulisseau transversal (51) agencé de manière à pouvoir être introduit dans le canal (49) de la clef et d'un coulisseau longitudinal (52) qui est agencé de manière à pouvoir s'appuyer contre le coulisseau transversal par des surfaces de coin (53; 57, 54), qui s'étend de façon longitudinale parallèlement à l'axe (74) du corps de barillet (46) et qui est sollicité élastiquement (55) dans le sens de son retrait,
caractérisé en ce que l'extrémité extérieure (56) du coulisseau longitudinal (52) est en appui axial contre un épaulement (105) du levier de commande (36) (figures 8, 9).

14. Dispositif selon l'une ou plusieurs des revendications 10 à 13, caractérisé en ce que le bras de levier extérieur (39) du levier de commande (36) est muni d'un galet de roulement (72 ou 72') (figures 1 à 5, 8, 9).

15. Dispositif selon la revendication 8 ou 9, caractérisé en ce que
le profil de came est constitué par la saillie radiale (96) d'un excentrique (95) qui est solidaire en rotation du corps (46) du barillet de serrure (44)
et l'excentrique (95) coopère avec l'une (94) des extrémités d'une bielle (91) dont l'autre extrémité (93) est reliée au bras de levier extérieur (39') du levier de commande (36') par une articulation (92) (figures 6, 7):

16. Dispositif selon la revendication 15, comportant un moyen de sûreté (50) contre le retrait de la clef,

formé d'un coulisseau transversal (51) agencé de manière à pouvoir être introduit dans le canal (49) de la clef et d'un coulisseau longitudinal (52) qui est agencé de manière à pouvoir s'appuyer contre le coulisseau transversal par des surfaces de coin (53; 57, 54), qui s'étend de façon longitudinale parallèlement à l'axe (74) du corps de barillet (46) et qui est sollicité élastiquement (55) dans le sens de son retrait,

caractérisé en ce que la bielle (91) comporte deux prises (99, 99') pour l'extrémité extérieure (56), possédant une surface oblique (89), du coulisseai longitudinal (52), ces prises comprenant, d'une part, une surface d'appui axiale (99) pour maintenir le coulisseau longitudinal (52) dans une position d'engagement définie (position de blocage des troncs de cône, figure 7)

et, d'autre part, une surface inclinée (99') complémentaire de la surface oblique (89) du coulisseau longitudinal (52) et venant en prise derrière celle-ci (position de libération des troncs de cône, figure 6).

17. Dispositif selon l'une ou plusieurs des revendications 1 à 16, caractérisé en ce que l'angle de conicité (77) des deux troncs de cône (12, 22), l'angle (17) des dents des dentures intérieure et extérieure (13, 23) de ceux-ci et la sollicitation élastique (31) dont ils sont l'objet sont tels que les dentures (13, 23) se désengagent temporairement lors du dépassement d'un couple limite déterminé (25) exercé sur la colonne de direction (11).

FIG. 1

FIG. 2

FIG. 3

FIG. 4

## FIG. 5

FIG. 6

FIG. 7

# FIG. 8

# FIG. 9